# EUROPEAN PATENT SPECIFICATION

(11) **EP 3 447 415 B1**
(45) Date of publication and mention of the grant of the patent: **23.03.2022**
(21) Application number: 18188161.6
(22) Date of filing: 09.08.2018
(51) Int. Cl.: F25D 23/06, C09D 7/00

(54) **OUTER PLATE OF REFRIGERATOR AND METHOD FOR MANUFACTURING THE SAME**
ÄUSSERE PLATTE EINES KÜHLSCHRANKES UND VERFAHREN ZUR HERSTELLUNG DAVON
PLAQUE EXTÉRIEURE D'UN RÉFRIGÉRATEUR ET SON PROCÉDÉ DE FABRICATION

(30) Priority: 21.08.2017 KR 20170105167
(43) Date of publication of application: 27.02.2019
(73) Proprietor: LG Electronics Inc., Seoul, 07336 (KR)
(72) Inventor: HONG, Sukyong, 08592 Seoul (KR); KIM, Youngwoo, 08592 Seoul (KR); JUNG, Hyesun, 08592 Seoul (KR)
(74) Representative: Vossius & Partner Patentanwälte Rechtsanwälte mbB

(56) References cited:
- CN-A- 107 325 596
- JP-A- 2000 254 998
- KR-A- 20170 067 930
- KR-A- 20180 058 001
- KR-B1- 101 790 499
- KR-U- 20090 002 567

## Description

### BACKGROUND

The present disclosure relates to an outer plate of a refrigerator and a method for manufacturing the same.

In general, refrigerators are home appliances for storing foods at a low temperature in a storage space that is covered by a door. Here, the storing space is cooled using cool air that is generated by heat-exchanging with a refrigerant circulating a refrigeration cycle to store the foods in an optimal state.

The inside of the refrigerator may be classified into a refrigerating compartment and a freezing compartment. Accommodation members such as shelves, drawers, and baskets may be disposed within the refrigerating compartment and the freezing compartment. Also, each of the refrigerating compartment and the freezing compartment may be closed by a door. The refrigerator is classified into various types according to positions of the refrigerator compartment and the freezer compartment and configurations of the doors.

The refrigerator tends to increase in size more and more, and multi-functions are provided to the refrigerator as dietary life changes and pursues high quality, and accordingly, refrigerators having various structures and including convenience devices in consideration of user convenience are being developed, and also, refrigerators having elegant and various outer appearances are being brought to the market.

For example, an electronic product in which a fingerprint resistance coating layer is formed on a surface of a housing made of a metal base material on which a hairline is processed is disclosed in Korean Patent Publication No. 10-2017-0073278.

However, in the technique according to the related art, if no color is formed on the base material on which the outer hairline is formed, when a color layer is formed on a surface to impart a color, the hairline is not exposed to the outside but is covered. Thus, the proper texture of the metal represented by the hairline may not be realized.

In addition, when the color layer is formed to form the color on a top surface on which the hairline is formed, a surface of the color layer may be damaged by scratch due to external contact. Particularly, such limitations may be more serious in refrigerator which frequently comes into contact with a user. KR 2009 0002567 U discloses a layer structure for an outer plate suitable for a refrigerator in accordance to the preamble of claim 1 and a related method for manufacturing it.

Related technology is shown in KR 2017 0067930

### SUMMARY

According to the invention, an outer plate of a refrigerator according to claim 1 is provided.

The hairline may be provided so that the steel plate has a surface roughness of about 8.0 Ra to about 1.1 Ra.

The nano pigment may have particles having a black color or a black-like color, each of which has a size of several ten nanometers to several hundred nanometers.

The paint for forming the primer layer may use polyester as a main resin and include a melamine-based cross linker, the adhesion promoter, and the nano pigment for realizing the color, and the nano pigment may contain a content of about 12% to about 15% with respect to the total amount of the paint.

The primer layer may have a thickness of about 4 *µ*m to about 6 *µ*m.

A non-chromate layer that prevents the hairline-processed portion from corroding and has chemical resistance may be provided on the front surface of the steel plate on which the hairline is provided, and the primer may be disposed on a front surface of the non-chromate layer.

The paint forming the clear coating layer may be made of an acrylic resin material that satisfies a molecular weight of about 6,000 to about 8,000 and a glass transition temperature of about 60 Tg(°C).

A matting agent having particles for diffusely reflecting incident light to reduce gloss of the outer plate is added to the paint for forming the clear coating layer.

Paint for forming the clear coating layer uses acryl as a main resin and includes a melamine-based cross linker and a matting agent for reducing gloss of the clear coating layer. The matting agent may contain a content of about 2% to about 3% with respect to the total amount of the paint.

The clear coating layer may have a thickness of about 3 *µ*m to about 4 *µ*m.

The matting agent may have particles, each of which has a size of about 3 *µ*m or less.

The clear coating layer may have gloss of about 40% to about 50%.

According to the invention, a method for manufacturing an outer plate of a refrigerator according to claim 1 provided as laid down in claim 11.

The paint for forming the primer layer includes: a pigment having a black color or a black-like color while the hairline is visible; and an adhesion promoter adhering between the steel plate and the clear coating layer.

In the forming of the hairline, the steel plate that is wound in a roll type may be continuously supplied, and a belt-type processing member rotating by a processing roller may contact the front surface of the steel plate to continuously form the hairline.

The steel plate may be supplied in a state of being wound in a roll type, and the primer layer and the clear coating layer may be continuously formed in a roll manner.

The processing member may include: a belt; and an abrasive provided on one surface of the belt and made of aluminum oxide material.

The processing member may form the hairline so that the steel plate has a surface roughness of about 8.0 Ra to about 1.1 Ra.

A matting agent for reducing gloss of the clear coating layer is added to the paint for forming the clear appearance.

The paint for forming the primer layer includes: a pigment having a black color or a black-like color while the hairline is visible; and an adhesion promoter adhering between the steel plate and the clear coating layer.

In the forming of the hairline, the steel plate that is wound in a roll type may be continuously supplied, and a belt-type processing member rotating by a processing roller may contact the front surface of the steel plate to continuously form the hairline.

The steel plate may be supplied in a state of being wound in a roll type, and the primer layer and the clear coating layer may be continuously formed in a roll manner.

The processing member may include: a belt; and an abrasive provided on one surface of the belt and made of aluminum oxide material.

The processing member may form the hairline so that the steel plate has a surface roughness of about 8.0 Ra to about 1.1 Ra.

A matting agent for reducing gloss of the clear coating layer is added to the paint for forming the clear coating layer, and the matting agent may have particles, each of which has a size of about 3 *µ*m or less.

The method according may further include a non-chromate layer having corrosion resistance and chemical resistance on the front surface of the steel plate on which the hairline is provided, wherein the non-chromate layer may be formed by continuously supplying the roll-type steel plate on which the hairline is formed.

The details of one or more embodiments are set forth in the accompanying drawings and the description below. Other features will be apparent from the description and drawings, and from the claims.

### BRIEF DESCRIPTION OF THE DRAWINGS

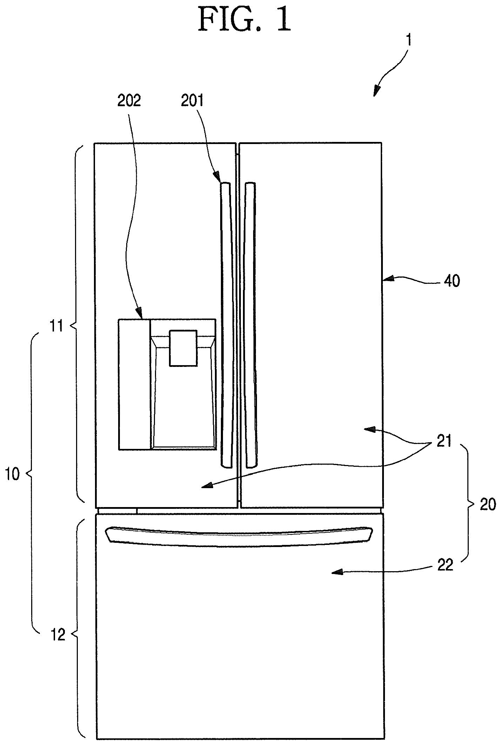

Fig. 1 is a front view of a refrigerator comprising an outer plate in accordance to the invention.
Fig. 2 is an exploded perspective view of the door of the refrigerator.
Fig. 3 is a schematic view illustrating a configuration of an outer plate of the refrigerator
Fig. 4 is a view sequentially illustrating a method for manufacturing an outer plate of a refrigerator.
Fig. 5 is a schematic view illustrating a process of processing a hairline of the outer plate of the refrigerator.

### DETAILED DESCRIPTION OF THE EMBODIMENTS

As illustrated in the drawing, a refrigerator 1 includes a cabinet 10 defining a storage space and a door 20 mounted on a front surface of the cabinet 10. Here, an outer appearance of the refrigerator 1 is defined by the cabinet 10 and the door 20.

The inside of the cabinet 10 may be partitioned into a plurality spaces. As illustrated in the drawing, the inside of the cabinet 10 may be partitioned into two spaces to define a refrigerating compartment 11, which is provided at an upper side, and a freezing compartment 12, which is provided at a lower side.

Also, the door 20 may include a refrigerating compartment door 21 and a freezing compartment door 22, which respectively independently open and close the refrigerator compartment 11 and the freezer compartment 12. The refrigerating compartment door 21 may be provided in a pair at both left and right sides to open and close the whole or a portion of the refrigerating compartment 11 through rotation thereof. Also, the freezing compartment door 22 may be inserted and withdrawn in a drawer manner.

The configuration and arrangement of the storage spaces and the shape of the door 20 may be variously changed in addition to those shown in the drawing.

The door 20 may define an outer appearance of the front surface of the refrigerator 1 in a state in which the door 20 is closed. Also, the refrigerator 1 may have a structure of which the entire front surface is exposed to the outside due to installation characteristics. Thus, most of the outer appearance visible by a user may be defined by the door 20.

A door handle 201 that facilitates the opening/closing of the door 20 may be provided on the door 20. Also, a dispenser 202 through which water or ice is dispensed to the outside may be provided in one door of the plurality of doors 20.

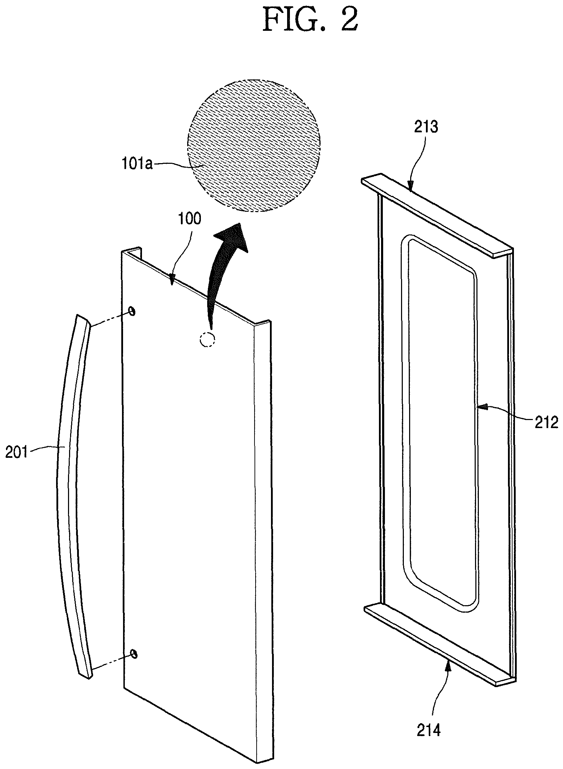

Fig. 2 is an exploded perspective view of the door of the refrigerator.

A structure of the door will now be described in more detail with reference to the drawings. For convenience of description, although the right door of the refrigerating compartment doors 21 has been described as an example in Fig. 2, the structure may be applied to all types of refrigerator doors.

The door 20 may include an outer plate 100 defining an outer appearance of the front surface thereof and a door liner 212 coupled to the outer plate 100 to define an outer appearance of a rear surface thereof. Also, top and bottom surfaces of the door 20 may be defined by an upper deco 213 and a lower deco 214, respectively.

The outer plate 100 may have a plate shape and be made of a metal material to define the front surface and a portion of a circumferential surface of the door 20. For example, as illustrated in Fig. 2, both ends of the outer plate 100 may be bent to define at least portions of both surfaces of the door 20.

The outer plate 100 is made of an actual metal material such as stainless steel to realize an elegant outer appearance of the refrigerator. Also, to maximize real texture of the metal, a pattern of a hairline is provided on the outer plate 100 so that the pattern of the hairline 111a is visible from the outside. Also, the outer plate 100 has a non-glossy black color to produce a more luxurious image. The outer plate 100 is not limited to the black color but may include dark colors similar to black, for example, s blue black color, a black brown color, a red black color, a dark navy color, a dark brown color, and the like.

The door handle 201 may be mounted on a front surface of the outer plate 100. The door handle 201 may have a bar shape. Also, upper and lower ends of the door handle 201 may be fixed to the outer plate 100, and at least a portion between the upper and lower ends may be spaced apart from the front surface of the outer plate 100 so that the user easily holds the door handle 201.

The door liner 212 may be made of a plastic material and define an outer appearance of a rear surface of the door 20. The door liner 212 may be formed to have a structure a gasket or a shelf mounted on the rear surface of the door 20 is capable of being mounted. A door dike vertically extending from both side ends may be disposed on the door liner 212. To realize such a complicated shape, the door liner 212 may be injection-molded with a plastic material.

The upper deco 213 may be coupled to an upper end of the outer plate 100 and an upper end of the door liner 212 to define the top surface of the door 20. The lower deco 214 may also be injection-molded with a plastic material.

The lower deco 214 may be coupled to a lower end of the outer plate 100 and a lower end of the door liner 212 to define the bottom surface of the door 20. The lower deco 214 may also be injection-molded with a plastic material.

A space may be defined in the door 20 by coupling the outer plate 100 to the door liner 212 and coupling the upper deco 213 to the lower deco 214. An insulation material (not shown) may be provided in the space. The insulation material may be formed by injecting a foam solution and be completely filled into the door 20 to allow the door 20 to be insulated. Thus, in the state in which the door is closed, the inside of the storage space may be insulated to maintain cold air within the refrigerator.

The structure of the outer plate 100 that defines the most of the outer appearance of the refrigerator 1, which is exposed to the outside in the state in which the door 20 is closed, will be described in more detail with reference to the accompanying drawings.

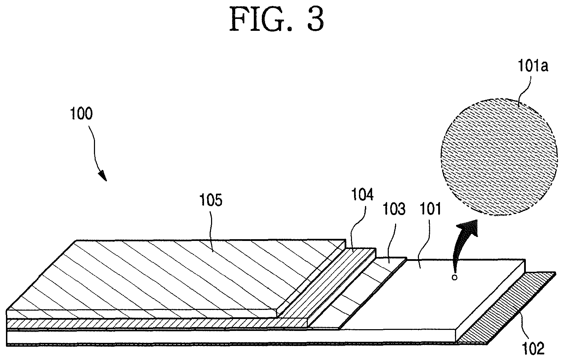

Fig. 3 is a schematic view illustrating a configuration of an outer plate of the refrigerator

Hereinafter, a surface of the outer plate 100 in a direction that is directed toward the outside of the refrigerator with respect to the outer plate 100 may be defined as a front surface, and a surface of the outer plate 100 in a direction that is directed toward the inside of the refrigerator with respect to the outer plate 100 may be defined as a rear surface. Also, the front surface may be called a top surface, and the rear surface may be called a bottom surface.

As illustrated in the drawing, the outer plate 100 includes a steel plate 101 made of a metal material, a primer layer 104 disposed on a top surface of the steel plate 101, and a clear coating layer 105 attached to the primer layer 104.

The outer plate 100 has a black color or a black-like dark color. To realize a more luxurious appearance, the outer plate 100 may have a gloss of about 40% to about 50% (if a completely transparent state is 100%). Also, the hairline pattern is exposed on the front surface of the outer plate 100 to realize more elegant metal texture. That is, the outer appearance of the front surface of the refrigerator 1 is defined by the outer plate 100 and be seen as the black matte metal material with the hairline pattern.

In detail, the steel plate 101 is made of a stainless steel material as a main component of the outer plate 100. The steel plate 101 may be made of a STS201 material to realize elegant texture. Also, the steel plate 101 may not have magnetism to provide feeling of real stainless steel to the user.

Also, the hairline 101a is disposed on a surface of the steel plate 101, i.e., the surface that is directed toward the outside of the refrigerator. The hairline 101a may maximize the real metal texture of the outer plate 100 and have a fine size on the steel plate 101. Also, the hairline 101a may be continuously processed on the roll-type steel plate 101.

Since the hairline 101a is provided, the steel plate 101 may be processed so that a surface roughness (Ra: arithmetic average roughness) of the steel plate 111 is approximately 0.8 Ra to 1.1 Ra. Thus, the hairline 101a is visible from the outside through the primer layer 104 and the clear layer 105. Particularly, the hairline 101a may be sufficiently visible to provide the metal texture to the user even on a matte surface.

A back coating layer 102 may be disposed on a rear surface of the steel plate 101. The back coating layer 102 may be a portion defining the rear surface of the outer plate 100. Also, the back coating layer 102 may be exposed to the outside when the steel plate 101 or the outer plate 100 is supplied. Thus, the back coating layer 102 may be applied to the rear surface of the steel plate 101 to provide corrosion resistance and/or chemical resistance, thereby providing corrosion and chemical stability of the steel plate 101. The back coating layer 102 may be formed while the steel plate 101 is molded. When the steel plate 101 incomes in a roll type, the steel plate 101 may income in a state of being formed on the rear surface of the steel plate 101.

Also, a non-chromate layer 103 may be disposed on the surface of the steel plate 101 on which the hairline 101a is processed. The non-chromate layer 103 may be applied to the surface of the steel plate 101 in a preprocessing process after the hairline 101a of the steel plate 101 is processed with a thin film of oxide or inorganic salt on the surface of the steel plate 101. The non-chromate layer 103 may have corrosion resistance and chemical resistance to protect the surface of the steel plate 101 on which the hairline 101a is processed. Also, the adhesion of the primer layer 104 may be further improved by the non-chromate layer 103. The non-chromate layer 103 may be omitted as necessary.

The primer layer 104 is disposed on the front surface on which the hairline 101a is provided, i.e., a front surface of the non-chromate layer 103. The primer layer 104 allows the clear coating layer 105 to adhere to the steel plate 101 and simultaneously express the color of the outer plate 100. Thus, the primer layer 104 may be called a color layer.

In detail, the primer layer 104 may have a thickness of about 4 *µ*m to about 6 *µ*m. When the primer layer 104 has a thin thickness of about 4 *µ*m or less, it may be difficult to sufficiently realize the black color. When the primer layer 121 has a thickness of about 6 *µ*m or more, the hairline 101a, which is disposed at a lower side, may not be exposed or may be unclearly visible.

The primer layer 104 performs the adhesion function and the color realization function at the same time. Paint for forming the primer layer 104 uses polyester as a main resin and include a melamine-based cross linker. Also, an adhesion promoter is added to the paint so that the steel plate 101 and the clear coating layer 105 adhere to each other.

Particularly, in the primer layer 104, a nano pigment is used to realize the color or secure transparency. The nano pigment is contained at a content of about 12% to about 15% with respect to the total amount of the pigment for applying the primer layer 104. Here, when the nano pigment is contained at a content of about 12% or less, the realization of the black color of the outer plate 100 may not be satisfied. When the nano pigment is contained at a content of about 15% or more, the hairline 101a may be covered and thus may not be sufficiently visible from the outside.

The black color of the primer layer 104 may be realized through the nano pigment, and simultaneously, the hairline 101a disposed below the primer layer 104 may be visible from the outside through the primer layer 104. As described above, the nano pigment may have a nano size of several ten nanometers to several hundred nanometers to realize the black color and also may have transparency so that the hairline 101a disposed below the primer layer 104 is visible. Thus, the color may be realized on the layer for the adhesion by the primer layer 104 without adding a separate layer for realizing the color. That is, the primer layer 104 realizes the adhesion and the color at the same time.

The clear coating layer 105 is disposed on the front surface of the primer layer 104. The clear coating layer 105 is transparent and thus is called a transparent coating layer. The clear coating layer 105 may define the surface of the outer plate 100, protect the primer layer 104 for realizing the color, and protect the surface of the steel plate on which the hairline 101a is provided. Also, the outer appearance of the outer plate 100 is seen as a matte state.

Due to the characteristics of the refrigerator door 20, frequent contact with a user's human body or a food container may not be avoided. Due to such characteristics of the refrigerator door 20, the outer plate 100 may have a suitable hardness.

Particularly, the clear coating layer for protecting the surface of the outer plate 100 may be provided in addition to the primer layer 104 to prevent a layer for realizing the color or a portion for realizing texture from being damaged by scratch. That is, when external scratch occurs, the primer layer 104, which is protected by the clear coating layer 105 to realize the color, and the hairline 101a may be prevented from being directly damaged.

The clear coating layer 105 may have to satisfy a hardness condition used for the outer appearance of the refrigerator door 20 and also satisfy fingerprint resistance so that stain such as a fingerprint does not remain on the surface of the outer plate 100 even when the user frequently contacts the clear coating layer 105.

For this, the paint for forming the clear coating layer 105 uses an acrylic resin as a main resin and include a melamine-based cross linker. Here, the acrylic resin may have a molecular weight of about 6,000 to about 8,000 to satisfy hardness, processability, and linearity and have a glass transition temperature of about 60 Tg(°C).

Also, the clear coating layer 105 may have glass of about 40%. For this, a matting agent of about 2% to about 3% with respect to the total amount of the paint may be used in the paint for forming the clear coating layer 105 as an additive to realize a matte effect. Also, silica may be used as the matting agent.

Also, the clear coating layer 105 may have a thickness of about 3 *µ*m to about 4 *µ*m. The matting agent added to the clear coating layer 105 may reduce gloss through diffused reflection of light and have a particle size of about 3 *µ*m or less. Thus, the clear coating layer 105 may have a thickness of about 3 *µ*m or more so that the clear coating layer 105 has a thickness enough to enable the matting agent to be added. However, when the thickness of the clear coating layer 105 is excessively thicker, the clear coating layer 105 may be away from the primer layer 104 that expresses the color to cause color heterogeneity and also may be away from the hairline 101a to cause heterogeneity. Thus, the clear coating layer may have a thickness of about 4 *µ*m or less so that the addition of the matting agent is enabled.

Hereinafter, a method for manufacturing an outer plate of a refrigerator having the above-described structure will be described with reference to the accompanying drawings.

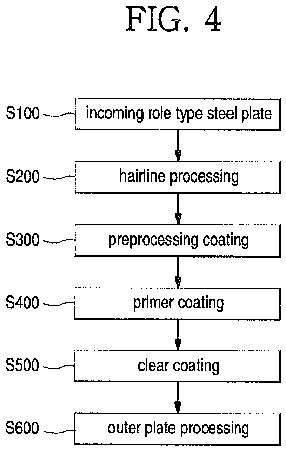

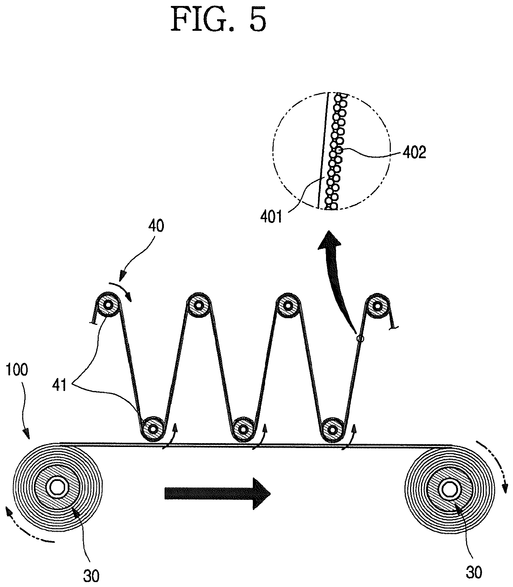

Fig. 4 is a view sequentially illustrating a method for manufacturing an outer plate of a refrigerator. Fig. 5 is a schematic view illustrating a process of processing a hairline of the outer plate of the refrigerator.

As illustrated in the drawings, to manufacture the outer plate 100, the steel plate 101 that is wound in a roll type may income first. The steel plate 101 may income in a roll state so that continuous processing is performed by using a stainless steel material.

Also, when the steel plate 101 incomes, the steel plate 101 may income in a state in which a back coating layer 102 is formed on a rear surface of the steel plate 101. That is, the back coating layer 102 may be supplied in a state of being formed by the manufacturer of the stainless steel plate [S100].

A hairline 101a may be processed on a front surface of the steel plate 101 that is in the roll state. The steel plate 101 may be continuously wound through a pair of transfer rollers 30. The steel plate 101 may contact a hairline processing member 40 disposed between the pair of transfer rollers 30 to process the hairline 101a on the surface of the steel plate 111.

The hairline processing member 40 may be provided in a belt type and rotatable while maintaining set tension by a plurality of processing rollers 41. Here, a portion of the rotating hairline processing member 40 may contact the surface of the steel plate 101, and the hairline 101a may be processed by an unevenness formed on a surface of the hairline processing member 40.

In more detail, as illustrated in Fig. 5, the hairline processing member 40 may have a belt structure having a predetermined area and form the hairline 101a by friction with the surface of the steel plate 101. Thus, the hairline processing member 40 may be called a sand paper. The hairline processing member 40 may be constituted by a belt 401 made of a fabric material and an abrasive 402 attached to one surface of the belt 401.

The belt 401 may have a length and width at which the belt 401 is capable of being installed on the processing roller 41 and may have a width corresponding to that of the steel plate 101. The belt 401 may be made of various materials that are capable of continuously processing the surface of the steel plate while maintaining the set tension as well as the fabric material.

The abrasive 402 may be made of aluminum oxide so that a surface roughness of the steel plate 101 has a set surface roughness (about 8 Ra to about 1.1 Ra) by the hairline 101a formed on the surface of the steel plate 101. The aluminum oxide may have a spherical crystal structure, and it may be possible to process a deep and clear hairline on the surface of the stainless steel having relatively high strength. Thus, the hairline 101a of the steel plate 101 may be clearly visible from the outside even in a state in which a primer layer 104 and a clear coating layer 105 are disposed at a front side thereof.

Also, the abrasive 402 may be attached to be multilayered on the belt 401 so that continuous processing is performed by the processing roller 41. Thus, even when the steel plate 101 is continuously supplied, the hairline processing member 40 may also rotate to contact the surface of the steel plate 101, thereby continuously forming the hairline 101a [S200].

After the hairline 101a is continuously processed on the surface of the steel plate 101, preprocessing coating may be performed to form a non-chromate layer 103. The preprocessing coating may be performed for applying the non-chromate 103 on the surface of the steel plate 101 on which the hairline 101a is formed. The preprocessing coating may be performed to form a thin film, thereby improving the adhesion between the steel plate 101 and the primer layer 104 and protecting the surface of the steel plate 101, on which the hairline 101a is processed. The non-chromate layer 103 may be applied to the front surface of the steel plate 101 while continuously supplying the roll-type steel plate 101 on which the hairline 101a is formed [S300].

After the non-chromate layer 103 is completely formed, the primer layer 104 may be formed on a top surface of the non-chromate layer 103. The primer layer 104 may be formed to apply paint for forming the primer layer 104. The roll-type steel plate 101 on which the non-chromate layer 103 is formed may be applied while being continuously supplied to form the primer layer 104 [S400].

After the non-chromate layer 104 is completely formed, the clear coating layer 105 may be formed on the top surface of the primer layer 104. The clear coating layer 105 may be formed by applying the paint for forming the clear coating layer 105. The roll-type steel plate 101, on which the primer layer 104 is formed, may be applied while being continuously supplied, like the coating processing of the primer layer 104, to form the clear coating layer 105 [S500].

As described above, the steel plate 101 may be continuously supplied and processed from the initial incoming to the formation of the clear coating layer 105 in the state of being wound in the roll type. That is, the steel plate 101 may be continuously processed while the steel plate 101 wound in the roll type is continuously supplied from the initial incoming of the steel plate 101 to the processing of the hairline 101a, the formation of the non-chromate layer 104, and the formation of the clear coating layer 105.

The steel plate that is completely formed may be transferred up to the clear coating layer 105 in the wound state and be cut and bent to have a size and shape corresponding to those of the outer plate 100 of the refrigerator door 20.

Also, the bent outer plate 100 may be assembled to form the refrigerator door 20.

The outer plate of the refrigerator and the method for manufacturing the same according to the invention have the following effects.

The color layer for realizing the color of the outer plate is disposed on the primer layer, and the steel plate and the clear layer adhere to each other by the primer layer. That is, the realization of the color and the adhesion between the layers may be enabled through the primer layer. Thus, the two functions may be realized through one layer. Thus, since it is unnecessary to provide the color layer and the adhesion layer, which are separately independent from each other, the manufacturing cost may be reduced, and the productivity may be improved.

Also, the color layer for realizing the color of the outer plate may be realized on the primer layer, and the clear coating layer may be disposed on the top surface of the primer layer so that the layer for realizing the color is protected by the clear layer. Thus, even though the surface of the outer plate is damaged by the scratch occurring due to the use characteristics of the refrigerator door, the primer layer for realizing the color may be prevented from being damaged to maintain the color and texture of the refrigerator as it is.

Also, the nano pigment is used as the pigment used for realizing the color on the primer layer, and the hairline disposed below the primer layer is exposed to the outside through the primer layer by the pigment. Thus, the texture of the hairline may be maintained on the outer plate while the outer plate has the color.

Also, the hairline may be processed to have the set roughness so that the hairline is visible from the outside through the primer layer and the clear coating layer event though the colored primer layer is disposed above the hairline. Thus, the texture of the hairline may be maintained on the outer plate while the outer plate has the color.

In addition, the hairline processed to have the set roughness may have the higher roughness than that in the conventional hairline processing. Thus, the texture of the hairline may be visible through the clear coating layer having the matte property from the outside as it is without being blurred.

Here, since the processing member is provided in the belt type, and the abrasive made of an aluminum oxide material is attached to be multilayered on the one side of the belt, the hairline having the set roughness may be continuously processed on the surface of the steel plate to improve the productivity.

In addition, the steel plate may income in the wound roll state and continuously supplied to continuously perform the processing of the hairline and the forming of the preprocessed layer, the primer layer, and the clear coating layer. Therefore, the productivity of the outer plate may be improved.

## Claims

1. An outer plate (100) of a refrigerator (1), comprising:
a steel plate (101) made of a stainless steel material and having a front surface on which a hairline (101a) is processed;
a primer layer (104) disposed on the front surface of the steel plate (101) so as to have a color and configured to couple adjacent layers to each other; **characterized by**
a clear coating layer (105) transparently disposed on a front surface of the primer layer (104) and configured to protect the primer layer (104) and define an outer appearance of refrigerator (1) having fingerprint resistance,
wherein paint for forming the primer layer (104) comprises a nano pigment realizing a color while the hairline disposed at a rear side thereof is visible and having a black color or a black-like color; and
an adhesion promoter for the adhesion between the steel plate and the coating layer,
wherein paint for forming the clear coating layer (105) uses acryl as a main resin and comprises:
a melamine-based cross linker; and
a matting agent having particles that diffusely reflect incident light for reducing gloss of the clear coating layer,
when viewed from the outside of the refrigerator (1), the hairline (101a) that is visible through the primer layer (104) and the clear coating layer (105) is visible together with the color of the primer layer, and
wherein the paint for forming the primer layer (104) uses polyester as a main resin and further comprises a melamine-based cross linker, and the nano pigment contains a content of 12% to 15% with respect to the total amount of the paint.

2. The outer plate according to claim 1, wherein the hairline (101a) is provided so that the steel plate (101) has a surface roughness of 8.0 Ra to 1.1 Ra.

3. The outer plate according to claim 1 or 2, wherein the matting agent includes a silica.

4. The outer plate according to any one of the preceding claims, wherein the primer layer (104) has a thickness of 4 *µ*m to 6 *µ*m.

5. The outer plate according to any one of the preceding claims, wherein a non-chromate layer that prevents the hairline-processed portion from corroding and has chemical resistance is provided on the front surface of the steel plate on which the hairline is provided, and
the primer is disposed on a front surface of the non-chromate layer.

6. The outer plate according to any one of the preceding claims, wherein the paint forming the clear coating layer is made of an acrylic resin material that satisfies a molecular weight of 6,000 to 8,000 and a glass transition temperature of 60 Tg (°C) .

7. The outer plate according to any one of the preceding claims, wherein the matting agent contains a content of 2% to 3% with respect to the total amount of the paint for forming the clear coating layer (105).

8. The outer plate according to claim 7, wherein the clear coating layer has a thickness of 3 *µ*m to 4 *µ*m larger than the particle size of the matting agent.

9. The outer plate according to claim 8, wherein the matting agent has particles, each of which has a size of 3 *µ*m or less.

10. The outer plate according to claim 7, 8, or 9, wherein the clear coating layer has gloss of 40% to 50%.

11. A method for manufacturing an outer plate of a refrigerator, which comprises: a steel plate (101) made of a stainless steel material and having a front surface on which a hairline (101a) is processed; a primer layer (104) disposed on the front surface of the steel plate (101) so as to have a color and configured to couple adjacent layers to each other; and
a clear coating layer (105) transparently disposed on a front surface of the primer layer (104) and configured to protect the primer layer (104) and define an outer appearance of refrigerator (1), wherein paint for forming the primer layer (104) comprises a nano pigment realizing a color while the hairline disposed at a rear side thereof is visible and having a black color or a black-like color; and an adhesion promoter for the adhesion between the steel plate and the coating layer, wherein paint for forming the clear coating layer (105) uses acryl as a main resin and comprises a melamine-based cross linker; and a matting agent having particles that diffusely reflect incident light for reducing gloss of the clear coating layer, wherein the outer appearance of refrigerator (1) has a fingerprint resistance, when viewed from the outside of the refrigerator (1), the hairline (101a) that is visible through the primer layer (104) and the clear coating layer (105) is visible together with the color of the primer layer, and wherein the paint for forming the primer layer (104) uses polyester as a main resin and further comprises a melamine-based cross linker, and the nano pigment contains a content of 12% to 15% with respect to the total amount of the paint, the method **characterized by** comprising:
incoming the roll-type steel plate;
forming the hairline on the front surface of the steel plate;
forming a primer layer formed on the front surface of the steel plate, on which the hairline is formed, having an outer appearance color through which the hairline is visible, and adhering to an adjacent layer; and
forming a clear coating layer formed on a front surface of the primer layer to protect the primer layer and defining an outer appearance.

12. The method according to claim 11, wherein, in the forming of the hairline, the steel plate that is wound in a roll type is continuously supplied, and
a belt-type processing member rotating by a processing roller contacts the front surface of the steel plate to continuously form the hairline,
wherein the processing member comprises:
a belt; and
an abrasive provided on one surface of the belt and made of aluminum oxide material,
wherein the processing member forms the hairline so that the steel plate has a surface roughness of 8.0 Ra to 1.1 Ra.

13. The method according to claim 11 or 12, further comprising a non-chromate layer having corrosion resistance and chemical resistance on the front surface of the steel plate on which the hairline is provided,
wherein the non-chromate layer is formed by continuously supplying the roll-type steel plate on which the hairline is formed.

## Patentansprüche

1. Eine Außenplatte (100) eines Kühlschranks (1), umfassend:
eine Stahlplatte (101) aus einem Edelstahlmaterial und mit einer vorderen Oberfläche, auf der eine Haarlinie (101a) eingearbeitet ist;
eine Grundierungsschicht (104), die auf der vorderen Oberfläche der Stahlplatte (101) so angeordnet ist, dass sie eine Farbe aufweist, und die so konfiguriert ist, dass sie benachbarte Schichten miteinander verbindet; **gekennzeichnet durch** eine klare Beschichtungsschicht (105), die transparent auf einer vorderen Oberfläche der Grundierungsschicht angeordnet ist und so konfiguriert ist, dass sie die Grundierungsschicht (104) schützt und ein äußeres Erscheinungsbild des Kühlschranks (1) mit Fingerabdruck-Resistenz definiert,
wobei die Farbe zur Bildung der Grundierungsschicht (104) ein Nanopigment umfasst, das eine Farbe erzielt während die an einer Rückseite davon angeordnete Haarlinie sichtbar ist, und eine schwarze Farbe oder eine schwarzähnliche Farbe aufweist; und
einen Haftvermittler für die Haftung zwischen der Stahlplatte und der Beschichtungsschicht,
wobei die Farbe zur Bildung der klaren Beschichtungsschicht (105) Acryl als ein Hauptharz verwendet und umfasst:
ein Vernetzungsmittel auf Melaminbasis; und
ein Mattierungsmittel mit Teilchen, die einfallendes Licht diffus reflektieren, um den Glanz der klaren Beschichtungsschicht zu verringern,
bei Betrachtung von der Außenseite des Kühlschranks (1) die Haarlinie (101a), die durch die Grundierungsschicht (104) und die klare Beschichtungsschicht (105) sichtbar ist, zusammen mit der Farbe der Grundierungsschicht sichtbar ist, und
wobei die Farbe zur Bildung der Grundierungsschicht (104) Polyester als ein Hauptharz verwendet und ferner ein Vernetzungsmittel auf Melaminbasis umfasst, und das Nanopigment einen Gehalt von 12 % bis 15 % bezogen auf die Gesamtmenge der Farbe aufweist.

2. Die Außenplatte nach Anspruch 1, wobei die Haarlinie (101a) so vorgesehen ist, dass die Stahlplatte (101) eine Oberflächenrauhigkeit von 8,0 Ra bis 1,1 Ra aufweist.

3. Die Außenplatte nach Anspruch 1 oder 2, wobei das Mattierungsmittel ein Siliciumdioxid enthält.

4. Die Außenplatte nach einem der vorherigen Ansprüche, wobei die Grundierungsschicht (104) eine Dicke von 4 µm bis 6 µm aufweist.

5. Die Außenplatte nach einem der vorherigen Ansprüche, wobei eine Nichtchromat-Schicht, die verhindert, dass der mit der Haarlinie bearbeitete Teil korrodiert, und welche chemische Beständigkeit aufweist, auf der vorderen Oberfläche der Stahlplatte bereitgestellt wird, auf der die Haarlinie bereitgestellt ist, und
der Grundierungsschicht auf einer vorderen Oberfläche der Nichtchromat-Schicht angeordnet ist.

6. Die Außenplatte nach einem der vorherigen Ansprüche, wobei die Farbe, die die klare Beschichtungsschicht bildet, aus einem Acrylharzmaterial hergestellt ist, das ein Molekulargewicht von 6.000 bis 8.000 und eine Glasübergangstemperatur von 60 Tg (°C) aufweist.

7. Die Außenplatte nach einem der vorherigen Ansprüche, wobei das Mattierungsmittel einen Gehalt von 2% bis 3% bezogen auf die Gesamtmenge der Farbe zur Bildung der klaren Beschichtungsschicht (105) aufweist.

8. Die Außenplatte nach Anspruch 7, wobei die klare Beschichtungsschicht eine Dicke von 3 µm bis 4 µm größer als die Teilchengröße des Mattierungsmittels aufweist.

9. Die Außenplatte nach Anspruch 8, wobei das Mattierungsmittel Teilchen aufweist, von denen jedes eine Größe von 3 µm oder weniger aufweist.

10. Die Außenplatte nach Anspruch 7, 8 oder 9, wobei die klare Beschichtungsschicht einen Glanz von 40% bis 50% aufweist.

11. Ein Verfahren zur Herstellung einer Außenplatte eines Kühlschranks, welcher umfasst:
eine Stahlplatte (101) aus einem Edelstahlmaterial und mit einer vorderen Oberfläche, auf der eine Haarlinie (101a) eingearbeitet ist; eine Grundierungsschichtschicht (104), die auf der vorderen Oberfläche der Stahlplatte (101) so angeordnet ist, dass sie eine Farbe aufweist, und die so konfiguriert ist, dass sie benachbarte Schichten miteinander verbindet; und
eine klare Beschichtungsschicht (105), die transparent auf einer vorderen Oberfläche der Grundierungsschicht (104) angeordnet ist und so konfiguriert ist, dass sie die Grundierungsschicht (104) schützt und ein äußeres Erscheinungsbild eines Kühlschranks (1) definiert, wobei die Farbe zur Bildung der Grundierungsschicht (104) ein Nanopigment umfasst, das eine Farbe erzielt während die an einer Rückseite davon angeordnete Haarlinie sichtbar ist, und eine schwarze Farbe oder eine schwarzähnliche Farbe aufweist; und einen Haftvermittler für die Haftung zwischen der Stahlplatte und der Beschichtungsschicht, wobei die Farbe zur Bildung der klaren Beschichtungsschicht (105) Acryl als ein Hauptharz verwendet und ein Vernetzungsmittel auf Melaminbasis; und ein Mattierungsmittel mit Teilchen, die einfallendes Licht diffus reflektieren, um den Glanz der klaren Beschichtungsschicht zu verringern, umfasst; wobei das äußere Erscheinungsbild des Kühlschranks (1) eine Fingerabdruck-Resistenz aufweist, bei Betrachtung von der Außenseite des Kühlschranks (1) die Haarlinie (101a), die durch die Grundierungsschicht (104) und die klare Beschichtungsschicht (105) sichtbar ist, zusammen mit der Farbe der Grundierungsschicht sichtbar ist, und wobei die Farbe zum Bilden der Grundierungsschicht (104) Polyester als ein Hauptharz verwendet und ferner ein Vernetzungsmittel auf Melaminbasis umfasst, und das Nanopigment einen Gehalt von 12% bis 15% bezogen auf die Gesamtmenge der Farbe aufweist, wobei das Verfahren **dadurch gekennzeichnet ist, dass** es umfasst:
Zuführen einer Stahlplatte vom Rollentyp;
Bilden der Haarlinie auf der vorderen Oberfläche der Stahlplatte;
Bilden einer Grundierungsschicht, die auf der vorderen Oberfläche der Stahlplatte gebildet ist, auf der die Haarlinie gebildet ist, die eine Farbe für das äußere Erscheinungsbild aufweist, durch die die Haarlinie sichtbar ist, und die an einer angrenzenden Schicht haftet; und
Bilden einer klaren Beschichtungsschicht, die auf einer vorderen Oberfläche der Grundierungsschicht gebildet ist, um die Grundierungsschicht zu schützen und ein äußeres Erscheinungsbild zu definieren.

12. Das Verfahren nach Anspruch 11, wobei bei der Bildung der Haarlinie die Stahlplatte, die rollenförmig aufgewickelt ist, kontinuierlich zugeführt wird, und
ein bandförmiges Bearbeitungselement, das durch eine Bearbeitungswalze rotiert, mit der vorderen Oberfläche der Stahlplatte in Kontakt ist, um kontinuierlich die Haarlinie zu bilden,
wobei das Bearbeitungselement umfasst:
ein Band; und
ein Schleifmittel, das auf einer Oberfläche des Bandes bereitgestellt ist und aus Aluminiumoxidmaterial hergestellt ist,
wobei das Bearbeitungselement die Haarlinie so bildet, dass die Stahlplatte eine Oberflächenrauhigkeit von 8,0 Ra bis 1,1 Ra aufweist.

13. Das Verfahren nach Anspruch 11 oder 12, ferner umfassend eine Nichtchromat-Schicht mit einer Korrosionsbeständigkeit und einer chemischen Beständigkeit auf der vorderen Oberfläche der Stahlplatte, auf der die Haarlinie bereitgestellt ist,
wobei die Nichtchromat-Schicht durch kontinuierliches Zuführen der Stahlplatte vom Rollentyp, auf der die Haarlinie gebildet ist, gebildet wird.

## Revendications

1. Plaque extérieure (100) d'un réfrigérateur (1), comprenant :
une plaque d'acier (101) constituée d'un matériau en acier inoxydable et ayant une surface avant sur laquelle un motif à lignes capillaires (101a) est traité ;
une couche d'apprêt (104) disposée sur la surface avant de la plaque d'acier (101) de façon à posséder une couleur et configurée pour coupler des couches adjacentes l'une avec l'autre ; **caractérisée par**
une couche de revêtement incolore (105) disposée de manière transparente sur une surface avant de la couche d'apprêt (104) et configurée pour protéger la couche d'apprêt (104) et définir un aspect extérieur du réfrigérateur (1) ayant une résistance aux traces de doigts,
dans laquelle une peinture pour la formation de la couche d'apprêt (104) comprend un nano-pigment réalisant une couleur tandis que le motif à lignes capillaires disposé au niveau d'un côté arrière de celle-ci est visible et ayant une couleur noire ou une couleur proche du noir ; et
un promoteur d'adhésion pour l'adhésion entre la plaque d'acier et la couche de revêtement,
dans laquelle une peinture pour la formation de la couche de revêtement incolore (105) utilise de l'acrylique à titre de résine principale et comprend :
un agent de réticulation à base de mélamine ; et
un agent de matité ayant des particules qui réfléchissent de manière diffuse une lumière incidente pour la réduction du brillant de la couche de revêtement incolore,
lorsqu'on les observe depuis le dehors du réfrigérateur (1), le motif à lignes capillaires (101a) est visible à travers la couche d'apprêt (104) et la couche de revêtement incolore (105) est visible conjointement avec la couleur de la couche d'apprêt, et
dans laquelle la peinture pour la formation de la couche d'apprêt (104) utilise du polyester à titre de résine principale et comprend en outre un agent de réticulation à base de mélamine, et le nano-pigment contient une teneur de 12 % à 15 % par rapport à la quantité totale de la peinture.

2. Plaque extérieure selon la revendication 1, dans laquelle le motif à lignes capillaires (101a) est ménagé de sorte que la plaque d'acier (101) possède une rugosité de surface de 8,0 Ra à 1,1 Ra.

3. Plaque extérieure selon la revendication 1 ou 2, dans laquelle l'agent de matité inclut une silice.

4. Plaque extérieure selon l'une quelconque des revendications précédentes, dans laquelle la couche d'apprêt (104) possède une épaisseur de 4 µm à 6 µm.

5. Plaque extérieure selon l'une quelconque des revendications précédentes, dans laquelle une couche sans chromate, qui empêche la partie à motif à lignes capillaires traité de se corroder et possède une résistance chimique, est ménagée sur la surface avant de la plaque d'acier sur laquelle le motif à lignes capillaires est ménagé, et
l'apprêt est disposé sur une surface avant de la couche sans chromate.

6. Plaque extérieure selon l'une quelconque des revendications précédentes, dans laquelle la peinture formant la couche de revêtement incolore est constituée d'un matériau de résine acrylique qui satisfait un poids moléculaire de 6 000 à 8 000 et une température de transition vitreuse de 60 Tg (°C).

7. Plaque extérieure selon l'une quelconque des revendications précédentes, dans laquelle l'agent de matité contient une teneur de 2 % à 3 % par rapport à la quantité totale de la peinture pour la formation de la couche de revêtement incolore (105).

8. Plaque extérieure selon la revendication 7, dans laquelle la couche de revêtement incolore possède une épaisseur plus grande de 3 µm à 4 µm que la taille particulaire de l'agent de matité.

9. Plaque extérieure selon la revendication 8, dans laquelle l'agent de matité possède des particules, chacune desquelles possède une taille de 3 µm ou moins.

10. Plaque extérieure selon la revendication 7, 8, ou 9, dans laquelle la couche de revêtement incolore possède un brillant de 40 % à 50 %.

11. Méthode pour la fabrication d'une plaque extérieure d'un réfrigérateur, qui comprend : une plaque d'acier (101) constituée d'un matériau en acier inoxydable et ayant une surface avant sur laquelle un motif à lignes capillaires (101a) est traité ; une couche d'apprêt (104) disposée sur la surface avant de la plaque d'acier (101) de façon à posséder une couleur et configurée pour coupler des couches adjacentes l'une avec l'autre ; et
une couche de revêtement incolore (105) disposée de manière transparente sur une surface avant de la couche d'apprêt (104) et configurée pour protéger la couche d'apprêt (104) et définir un aspect extérieur du réfrigérateur (1), dans laquelle une peinture pour la formation de la couche d'apprêt (104) comprend un nano-pigment réalisant une couleur tandis que le motif à lignes capillaires disposé au niveau d'un côté arrière de celle-ci est visible et ayant une couleur noire ou une couleur proche du noir ; et un promoteur d'adhésion pour l'adhésion entre la plaque d'acier et la couche de revêtement, dans laquelle une peinture pour la formation de la couche de revêtement incolore (105) utilise de l'acryl à titre de résine principale et comprend un agent de réticulation à base de mélamine ; et un agent de matité ayant des particules qui réfléchissent de manière diffuse une lumière incidente pour la réduction du brillant de la couche de revêtement incolore, dans laquelle l'aspect extérieur du réfrigérateur (1) possède une résistance aux traces de doigts, lorsqu'on les observe depuis le dehors du réfrigérateur (1), le motif à lignes capillaires (101a) est visible à travers la couche d'apprêt (104) et la couche de revêtement incolore (105) est visible conjointement avec la couleur de la couche d'apprêt, et dans laquelle la peinture pour la formation de la couche d'apprêt (104) utilise du polyester à titre de résine principale et comprend en outre un agent de réticulation à base de mélamine, et le nano-pigment contient une teneur de 12 % à 15 % par rapport à la quantité totale de la peinture, la méthode étant **caractérisée par le fait qu'**elle comprend :
l'arrivée de la plaque d'acier de type en rouleau ;
la formation du motif à lignes capillaires sur la surface avant de la plaque d'acier ;
la formation d'une couche d'apprêt formée sur la surface avant de la plaque d'acier, sur laquelle le motif à lignes capillaires est formé, ayant une couleur d'aspect extérieur à travers laquelle le motif à lignes capillaires est visible, et adhérant à une couche adjacente ; et
la formation d'une couche de revêtement incolore formée sur une surface avant de la couche d'apprêt pour protéger la couche d'apprêt et définissant un aspect extérieur.

12. Méthode selon la revendication 11, dans laquelle, lors de la formation du motif à lignes capillaires, la plaque d'acier qui est enroulée en un type de rouleau est alimentée en continu, et
un élément de traitement de type courroie mis en rotation par un rouleau de traitement vient en contact avec la surface avant de la plaque d'acier pour former en continu le motif à lignes capillaires,
dans laquelle l'élément de traitement comprend :
une courroie ; et
un abrasif ménagé sur une surface de la courroie et constitué de matériau d'oxyde d'aluminium,
dans laquelle l'élément de traitement forme le motif à lignes capillaires de sorte que la plaque d'acier possède une rugosité de surface de 8,0 Ra à 1,1 Ra.

13. Méthode selon la revendication 11 ou 12, comprenant en outre une couche sans chromate ayant une résistance à la corrosion et une résistance chimique sur la surface avant de la plaque d'acier sur laquelle le motif à lignes capillaires est ménagé,
dans laquelle la couche sans chromate est formée par l'alimentation en continu de la plaque d'acier de type en rouleau sur laquelle le motif à lignes capillaires est formé.
